# EUROPÄISCHE PATENTANMELDUNG

(11) **EP 1 772 220 A1**
(43) Veröffentlichungstag der Anmeldung: **11.04.2007**
(21) Anmeldenummer: 05021985.6
(22) Anmeldetag: 08.10.2005
(51) Int. Cl.: B23C 3/18, B23C 5/10

(54) **Fräsverfahren**

(71) Anmelder: MTU Aero Engines GmbH, 80995 München (DE)
(72) Erfinder: Gläßer, Arndt, 85221 Dachau (DE); Heinrich, Stefan, 82276 Adelshofen (DE); Lebküchner, Götz, 82110 Germering (DE)

(57) **Zusammenfassung**

Die Erfindung betrifft ein Fräsverfahren zur Fertigung von Bauteilen aus schwer zerspanbaren Werkstoffen für Turbomaschinen unter Erzeugung von Vertiefungen mit einer oder mehreren Seitenwänden, insbesondere zur Fertigung von integral beschaufelten Rotoren für Gasturbinen, bei welchen die Vertiefungen Strömungskanäle und die Seitenwände Schaufeloberflächen eines integral beschaufelten Rotors bilden, wobei ein Fräswerkzeug um eine Fräserachse zentrisch rotiert, wobei das Fräswerkzeug zusätzlich eine exzentrische Kreisbewegung um eine von der Fräserachse beabstandete Kreisbahnachse ausführt, und wobei die Kreisbahnachse einschließlich des Fräswerkzeugs eine Vorschubbewegung auf einer geraden und/oder gekrümmten Bahn ausführt. Erfindungsgemäß wird ein Fräswerkzeug (10) verwendet, dessen Schneidkanten (15) mit Vorsprüngen (16) und Rücksprüngen (17) konturiert sind.

## Beschreibung

Die Erfindung betrifft ein Fräsverfahren nach dem Oberbegriff des Anspruchs 1.

Aus der DE 102 19 012 B4 ist ein Fräsverfahren zur Fertigung von Bauteilen aus schwer zerspanbaren Werkstoffen für Turbomaschinen bekannt. Das dort offenbarte Fräsverfahren dient insbesondere der Fertigung von integral beschaufelten Rotoren für Gasturbinen, wobei zu fräsende Vertiefungen Strömungskanäle und die Vertiefungen begrenzende Seitenwände Schaufeloberflächen des integral beschaufelten Gasturbinenrotors bilden. Bei dem Fräsverfahren gemäß DE 102 19 012 B4 wird ein Fräswerkzeug um seine Fräserachse rotatorisch angetrieben, wobei das Fräswerkzeug zusätzlich zu dieser zentrischen Rotation um die Fräserachse eine exzentrische Kreisbewegung um eine von der Fräserachse beabstandete Kreisbahnachse ausführt. Dabei ist der Drehsinn der Rotation dem Drehsinn der Kreisbewegung entgegengesetzt und die Drehzahl der Rotation ist erheblich höher als die Drehzahl der Kreisbewegung. Weiterhin führt die Kreisbahnachse einschließlich des Fräswerkzeugs eine Vorschubbewegung auf einer geraden und/oder gekrümmten Bahn mit oder ohne Schwenkbewegung aus. Ein Fräsen mit einer derartigen Bewegung des Fräswerkzeugs wird auch als trochoides Fräsen bezeichnet.

Bei dem trochoiden Fräsen kommt das in der DE 102 19 012 B4 gezeigte Fräswerkzeug zum Einsatz, welches über glatte Schneidkanten verfügt. Bedingt durch die Geometrie dieses Fräswerkzeugs sowie die Bewegung desselben entsteht beim trochoiden Fräsen ein sehr großes Spanvolumen pro Zeiteinheit mit einer relativ großen Spangeometrie, weshalb die Abführung der Späne aus dem Spankanal des Fräswerkzeugs problematisch ist. Weiterhin neigen die Fräswerkzeuge zu starken Schwingungen, wodurch Beschädigungen derselben verursacht werden können.

Hiervon ausgehend liegt der vorliegenden Erfindung das Problem zu Grunde, ein neuartiges Fräsverfahren zu schaffen. Dieses Problem wird durch ein Fräsverfahren nach Anspruch 1 gelöst. Erfindungsgemäß wird ein Fräswerkzeug verwendet, dessen Schneidkanten mit Vorsprüngen und Rücksprüngen konturiert sind.

Im Sinne des erfindungsgemäßen Verfahrens wird zum trochoiden Fräsen ein Fräswerkzeug verwendet, dessen Schneidkanten mit Vorsprüngen und Rücksprüngen konturiert sind. Eine derartige Konturierung der Schneidkanten des Fräswerkzeugs wird auch als Kordelverzahnung bezeichnet. Die Verwendung eines solchen Fräswerkzeugs verfügt über den Vorteil, dass die beim Fräsen erzeugten Späne eine deutlich kleinere Spangeometrie aufweisen und daher problemlos aus dem Spankanal abgeführt werden können. Weiterhin können mit Hilfe solcher Fräswerkzeuge Schwingungen beim trochoiden Fräsen eliminiert werden, wodurch der Verschleiß der Fräswerkzeuge minimiert wird. Hierdurch können höhere Einsatzzeiten bzw. Standzeiten der Fräswerkzeuge realisiert werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
Fig. 1: ein beim erfindungsgemäßen Fräsverfahren verwendetes Fräswerkzeug; und
Fig. 2: das Detail II des Fräswerkzeugs der Fig. 1.

Die Erfindung betrifft ein Fräsverfahren zur Fertigung von Bauteilen aus schwer zerspanbaren Werkstoffen für Turbomaschinen unter Erzeugung von Vertiefungen mit einer oder mehreren Seitenwänden. Insbesondere dient das erfindungsgemäße Fräsverfahren der Fertigung von integral beschaufelten Rotoren für Gasturbinen, bei welchen die Vertiefungen Strömungskanäle und die Seitenwände Schaufeloberflächen des herzustellenden, integral beschaufelten Rotors bilden.

Beim erfindungsgemäßen Fräsverfahren handelt es sich um ein trochoides Fräsverfahren, wobei Details des trochoiden Fräsens aus DE 102 19 012 B4, auf deren Offenbarungsgehalt hier explizit Bezug genommen wird, bekannt sind. An dieser Stelle soll der Vollständigkeit halber darauf hingewiesen werden, dass beim trochoiden Fräsen ein Fräswerkzeug um eine Fräserachse zentrisch rotiert, wobei das Fräswerkzeug zusätzlich eine exzentrische Kreisbewegung um eine von der Fräserachse beabstandete Kreisbahnachse ausführt. Der Drehsinn der Rotation um die Fräserachse ist dabei dem Drehsinn der Kreisbewegung gleichgesetzt (Gleichlauf), wobei die Drehzahl der Rotation um die Fräserachse erheblich höher ist als die Drehzahl der Kreisbewegung. Die Kreisbahnachse einschließlich des sich exzentrisch um dieselbe herum bewegten Fräswerkzeugs führen weiterhin quer zu ihrer Längsrichtung eine translatorische Vorschubbewegung auf einer geraden und/oder gekrümmten Bahn mit oder ohne Schwenkbewegung aus. Wie bereits erwähnt, ergeben sich weitere Details aus der DE 102 19 012 B4.

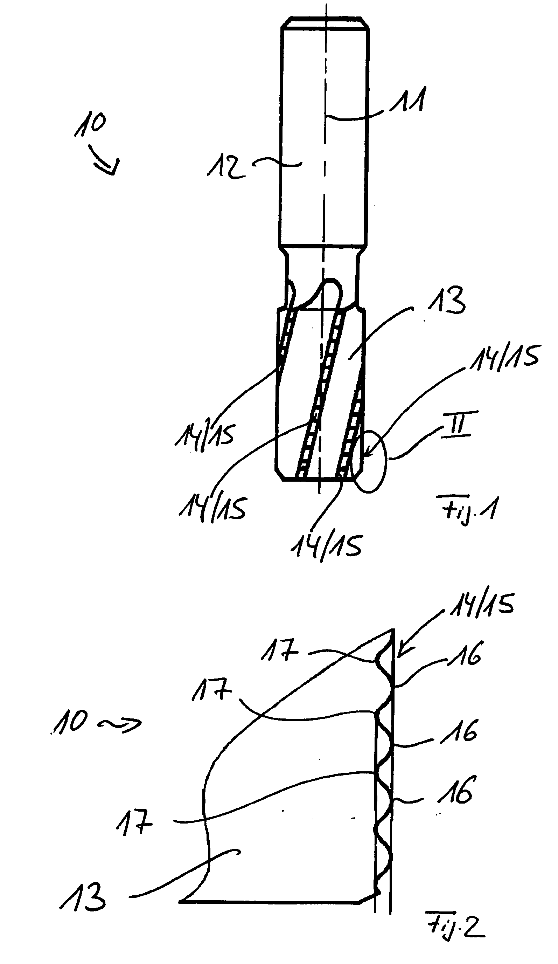

Im Sinne der hier vorliegenden Erfindung wird zum Fräsen ein Fräswerkzeug verwendet, dessen Schneidkanten mit Vorsprüngen und Rücksprüngen konturiert sind. Ein derartiges Fräswerkzeug ist in Fig. 1 und 2 gezeigt.

So zeigt Fig. 1 ein beim erfindungsgemäßen Fräsverfahren verwendetes Fräswerkzeug 10, welches beim Fräsen um eine Fräserachse 11 die bereits erwähnte zentrische Rotation ausführt. Das Fräswerkzeug 10 verfügt über zwei Abschnitte 12 und 13, wobei der Abschnitt 12 des Fräswerkzeugs 10 dem Spannen desselben in einer Fräsmaschine dient. Im Abschnitt 13 des Fräswerkzeugs 10 sind Schneiden 14 mit Schneidkanten 15 ausgebildet.

Wie insbesondere Fig. 2 entnommen werden kann, sind die Schneidkanten 15 der Schneiden 14 mit Vorsprüngen 16 sowie Rücksprüngen 17 konturiert. Eine derartige Konturierung der Schneidkanten 14 wird auch als Kordelverzahnung bezeichnet.

In der Darstellung der Fig. 2 bilden die Vorsprünge 16 sowie die Rücksprünge 17 eine wellenartige Kontur, die dadurch gebildet wird, dass sowohl die Vorsprünge 16 als auch die Rücksprünge 17 abgerundet ausgebildet sind. Es sei darauf hingewiesen, dass die Vorsprünge sowie Rücksprünge auch scharfkantig ausgebildet sein können und dann eine trapezartige oder dreieckartige Konturierung der Schneidkanten bereitstellen.

Die Vorsprünge 16 sowie Rücksprünge 17 können entweder auf Schraubenlinien oder auf Kreislinien liegen.

Bei Verwendung des in Fig. 1 und 2 dargestellten Fräswerkzeugs zum trochoiden Fräsen können Schwingungen des Fräswerkzeugs eliminiert werden, wodurch das Fräswerkzeug einer geringeren Verschleißbeanspruchung unterliegt. Weiterhin ergeben sich beim trochoiden Fräsen unter Verwendung des in Fig. 1 und 2 dargestellten Fräswerkzeugs Späne mit einer relativ kleinen Spangeometrie, die problemlos aus einem Spankanal abgeführt werden können.

## Patentansprüche

1. Fräsverfahren zur Fertigung von Bauteilen aus schwer zerspanbaren Werkstoffen für Turbomaschinen unter Erzeugung von Vertiefungen mit einer oder mehreren Seitenwänden, insbesondere zur Fertigung von integral beschaufelten Rotoren für Gasturbinen, bei welchen die Vertiefungen Strömungskanäle und die Seitenwände Schaufeloberflächen eines integral beschaufelten Rotors bilden, wobei ein Fräswerkzeug um eine Fräserachse zentrisch rotiert, wobei das Fräswerkzeug zusätzlich eine exzentrische Kreisbewegung um eine von der Fräserachse beabstandete Kreisbahnachse ausführt, und wobei die Kreisbahnachse einschließlich des Fräswerkzeugs eine Vorschubbewegung auf einer geraden und/oder gekrümmten Bahn ausführt,
**dadurch gekennzeichnet,**
**dass** ein Fräswerkzeug (10) verwendet wird, dessen Schneidkanten (15) mit Vorsprüngen (16) und Rücksprüngen (17) konturiert sind.

2. Fräsverfahren nach Anspruch 1,
**dadurch gekennzeichnet,**
**dass** die Schneidkanten (15) des zum Fräsen verwendeten Fräswerkzeugs (10) im Sinne einer Kordelverzahnung konturiert sind.

3. Fräsverfahren nach Anspruch 1 oder 2,
**dadurch gekennzeichnet,**
**dass** die Vorsprünge (16) und die Rücksprünge (17) der Schneidkanten (15) des zum Fräsen verwendeten Fräswerkzeugs (10) auf jeweils mindestens einer Schraubenlinie liegen.

4. Fräsverfahren nach Anspruch 1 oder 2,
**dadurch gekennzeichnet,**
**dass** die Vorsprünge (16) und die Rücksprünge (17) der Schneidkanten (15) des zum Fräsen verwendeten Fräswerkzeugs (10) auf mehreren Kreislinien liegen.

5. Fräsverfahren nach einem oder mehreren der Ansprüche 1 bis 4,
**dadurch gekennzeichnet,**
**dass** die Vorsprünge (16) sowie die Rücksprünge (17) eine wellenartige oder trapezartige oder dreieckartige Kontur ausbilden.
